**Europäisches Patentamt**

(19) **European Patent Office**

**Office européen des brevets**

(11) Numéro de publication : **0 286 518 B1**

(12) # FASCICULE DE BREVET EUROPEEN

(45) Date de publication du fascicule du brevet :
06.11.91 Bulletin 91/45

(51) Int. Cl.⁵ : **G01V 3/12, G01V 1/16**

(21) Numéro de dépôt : **88400787.3**

(22) Date de dépôt : **31.03.88**

(54) **Procédé et système d'acquisition et de séparation des effets de sources simultanées de champ électromagnétique et application à la prédiction de séismes.**

(30) Priorité : **09.04.87 FR 8705023**

(43) Date de publication de la demande :
**12.10.88 Bulletin 88/41**

(45) Mention de la délivrance du brevet :
**06.11.91 Bulletin 91/45**

(84) Etats contractants désignés :
**AT BE CH DE ES FR GB GR IT LI LU NL SE**

(56) Documents cités :
EP-A- 0 067 924
GB-A- 2 183 038
US-A- 4 449 099
US-A- 4 612 506
REVIEW OF SCIENTIFIC INSTRUMENTS, vol. 56, no. 2, février 1985, pages 278-282, American Institute of Physics, Woodbury, New York, US; J.V. OLSON et al.: "Instrument to measure the polarization state of waves"
IBM JOURNAL OF RESEARCH & DEVELOPMENT, vol. 22, no. 5, septembre 1978, pages 481-486, New York, US; J. GAZDAG: "Extrapolation of seismic waveforms by fourier methods"

(56) Documents cités :
ATM: ARCHIV FÜR TECHNISCHES MESSEN UND INDUSTRIELLE MESSTECHNIK, no. 439, août 1972, pages R119-R120, Munich, DE; J. LENIHAN: "Elektrische Erdbebenüberwachung"
NATURE, vol. 315, 30 mai 1985, pages 370,371, Londres, GB; P,W. BURTON: "Electrical earthquake prediction"

(73) Titulaire : **COMPAGNIE GENERALE DE GEOPHYSIQUE**
**1, Rue Léon Migaux**
**F-91341 Massy Cédex (FR)**

(72) Inventeur : **Naville, Charles**
**6, rue Vlaminck E3, 11D**
**F-91350 Grigny (FR)**
Inventeur : **Spitz, Simon**
**90, rue du Commerce**
**F-75015 Paris (FR)**
Inventeur : **Rocroi, Jean-Pierre**
**95, Boulevard Jean-Jaurès**
**F-94260 Fresnes (FR)**

(74) Mandataire : **Schrimpf, Robert et al**
**Cabinet Regimbeau 26, Avenue Kléber**
**F-75116 Paris (FR)**

## Description

La présente invention concerne un procédé et un système d'acquisition et de séparation des effets de sources simultanées de champ électromagnétique.

Elle trouve notamment application dans la prédiction de séismes qui seraient précédés de signaux électromagnétiques précurseurs.

Cependant, l'invention n'est pas limitée à cette application ; elle s'applique également a l'étude de la structure et de la composition du sous-sol.

On sait en effet que les composantes électriques et magnétiques du champ créé par une source électromagnétique, fonctions du temps ou de la pulsation, telles qu'on les observe à la surface du sol, sont liées aux caractéristiques électromagnétiques (conductivité, permittivité, perméabilité magnétique) des milieux placés sous l'influence de ce champ. Ces caractéristiques dépendent elles-mêmes de la nature du sous-sol. De ce fait, on a cherché depuis longtemps à déduire la structure et la nature du sous-sol de l'observation des champs électromagnétiques.

Les domaines courants d'application de l'analyse du sous-sol vont de l'étude générale de la Terre (Physique du Globe), à la recherche de gisements (minerais, hydrocarbures...) et au génie civil.

De nombreux procédés d'acquisition et de traitement de la mesure des composantes électriques et magnétiques du champ ont déjà été proposés comme dans US-A-4612506.

Cependant d'une façon générale les procédés jusqu'ici proposés ne donnent pas pleinement satisfaction.

En particulier, les procédés classiques d'acquisition et de traitement ne permettent pas de séparer correctement le signal utile, lié à une source donnée, des signaux dus aux autres sources (le bruit). Pourtant la qualité du résultat obtenu (estimation de la structure et de la composition du sous-sol, par exemple) dépend de la qualité du signal traité.

La présente invention a pour but d'éliminer ces inconvénients.

Elle propose un système d'acquisition et de séparation des effets de sources simultanées de champ électromagnétique comprenant un réseau de n capteurs liés à des moyens d'enregistrement dans lequel le nombre n minimal de capteurs par réseau est égal à 2s + 2, s étant le nombre de sources simultanées à analyser.

Comme cela sera explicité par la suite, l'utilisation d'un tel nombre de capteurs permet de séparer les différentes sources en utilisant uniquement les éléments non diagonaux de la matrice de covariance du réseau.

Les moyens d'enregistrement mémorisent les n traces issues des capteurs, de façon synchrone.

Le procédé d'acquisition et de séparation des effets de sources simultanées de champ électromagnétique comprend selon l'invention l'enregistrement de n traces $g_i(t)$ issues d'un réseau de n capteurs dans lequel n est supérieur ou égal à 2s + 2, s étant le nombre de sources simultanées à étudier.

Selon une caractéristique avantageuse de l'invention, le procédé comprend les phases successives consistant à :

i) — déterminer le nombre s de sources actives et

ii) — reconstituer l'effet de chaque source.

De préférence, selon l'invention, la détermination du nombre de sources actives est faite en déterminant le nombre de valeurs propres dominantes de matrices interspectrales :

$$(1) \qquad \Upsilon_{ij} = \sum_{\omega_k} f(\omega_k) g_i(\omega_k) \; g_j^*(\omega_k)$$

Les notations ci-dessus ainsi que le mode de construction des matrices interspectrales seront explicités dans la suite de la description.

Ainsi, l'apparition d'une source nouvelle est détectée par l'apparition d'une valeur propre dominante nouvelle.

Par ailleurs selon l'invention la reconstitution de l'effet de chaque source, comprend de préférence les étapes consistant à :

— déterminer les vecteurs-sources de s sources sur s capteurs, et

— déterminer les vecteurs-sources sur les autres capteurs à l'aide d'un opérateur de propagation.

Le procédé ainsi défini permet d'isoler l'effet de chaque source active au moment de la mesure et permet en particulier d'identifier un signal électromagnétique précurseur de séisme.

D'autres caractéristiques, buts et avantages de la présente invention, apparaîtront à la lecture de la description détaillée qui va suivre et en regard des dessins annexés, donnés à titre d'exemple non limitatif et sur lesquels :

— la figure 1 représente de façon schématique un système conforme à la présente invention d'acquisition et de séparation des effets de source simultanées de champ électromagnétique,

— la figure 2 représente un organigramme général du procédé, conforme à la présente invention, d'acquisition et de séparation d'une source électromagnétique nouvelle en vue d'une prédiction de séismes,

— la figure 3 représente un organigramme général des étapes du procédé permettant d'identifier l'apparition d'une source nouvelle, et

— la figure 4 représente un organigramme général des étapes du procédé permettant de séparer les sources et de reconstituer la trace de celles-ci.

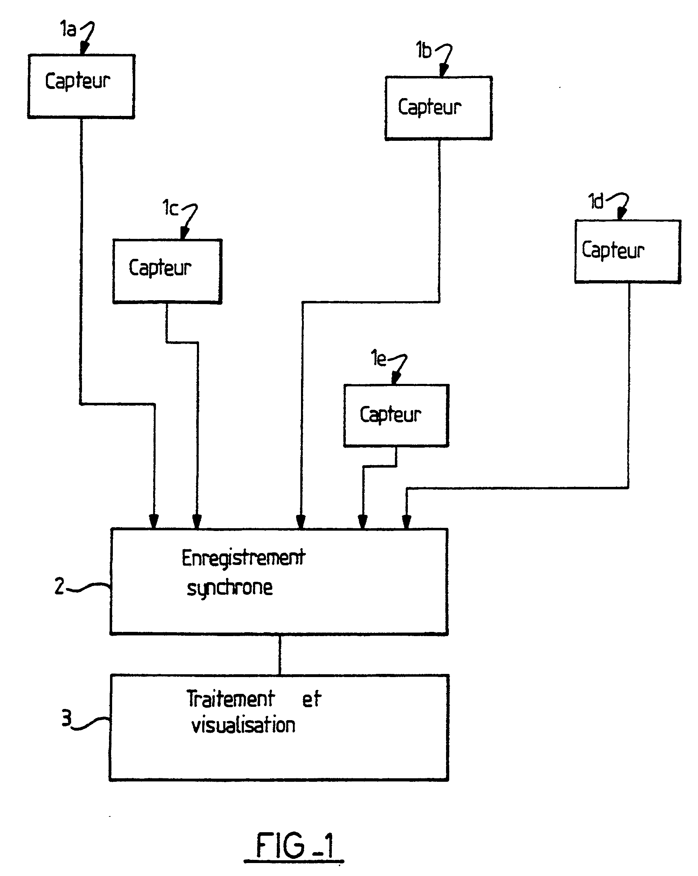

Le système conforme à la présente invention, tel qu'illustré sur la figure 1, comprend un réseau de n capteurs 1a à 1e sensibles au champ électromagnétique.

Il peut s'agir de dipôles électriques et/ou de magnétomètres. De nombreux dispositifs-capteurs appropriés sont bien connus de l'homme de l'art. La structure de ces capteurs ne sera donc pas décrite plus en détail par la suite.

Le réseau peut être formé d'un réseau local de n capteurs discrets.

Le réseau peut encore être un réseau régional formé de n réseaux locaux, (chaque réseau local du réseau régional étant considéré, au traitement, comme un capteur d'un réseau local).

Un enregistreur 2 mémorise de façon synchrone les n traces issues des n capteurs. Les traces sont ensuite traitées dans des moyens 3 afin de séparer les effets des différentes sources.

Selon l'invention le nombre n de capteurs est supérieur à 2s + 2, où s représente le nombre de sources à étudier. Cette disposition sera explicitée par la suite.

On va maintenant décrire le procédé d'acquisition et de séparation des effets de sources électromagnétiques conforme à l'invention, dans son application à la prédiction de séismes.

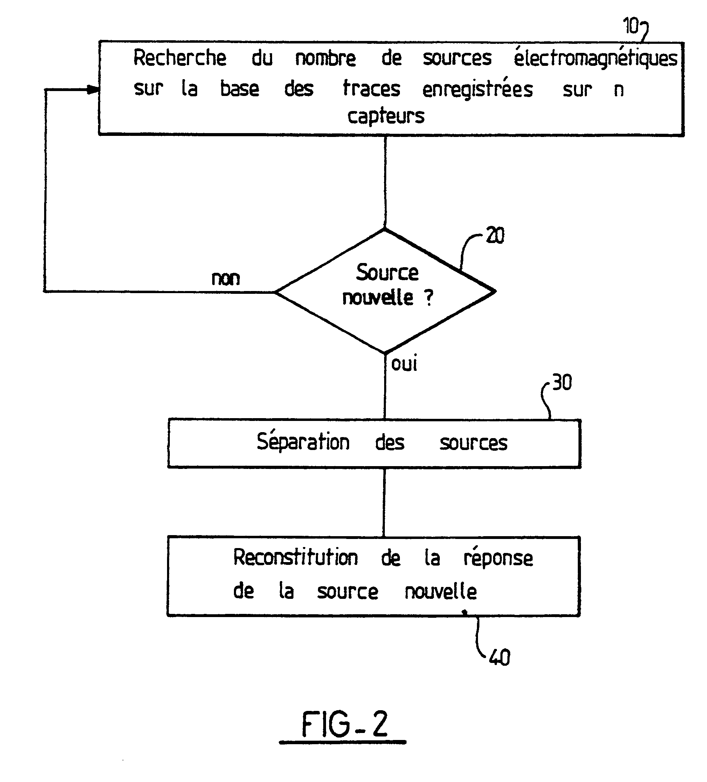

Comme cela est illustré schématiquement sur la figure 2 annexée, le procédé consiste essentiellement, dans une première phase, à rechercher le nombre de sources électromagnétiques actives au moment de l'enregistrement (étape 10) pour détecter l'apparition d'une source nouvelle (étape 20), susceptible par exemple d'être liée à l'apparition prochaine d'un séisme ; puis lors de la détection d'une source nouvelle, dans une seconde phase, à séparer les sources (étape 30) pour reconstituer la réponse temporelle de la source nouvelle (étape 40).

On va maintenant préciser le déroulement de ces deux phases successives.

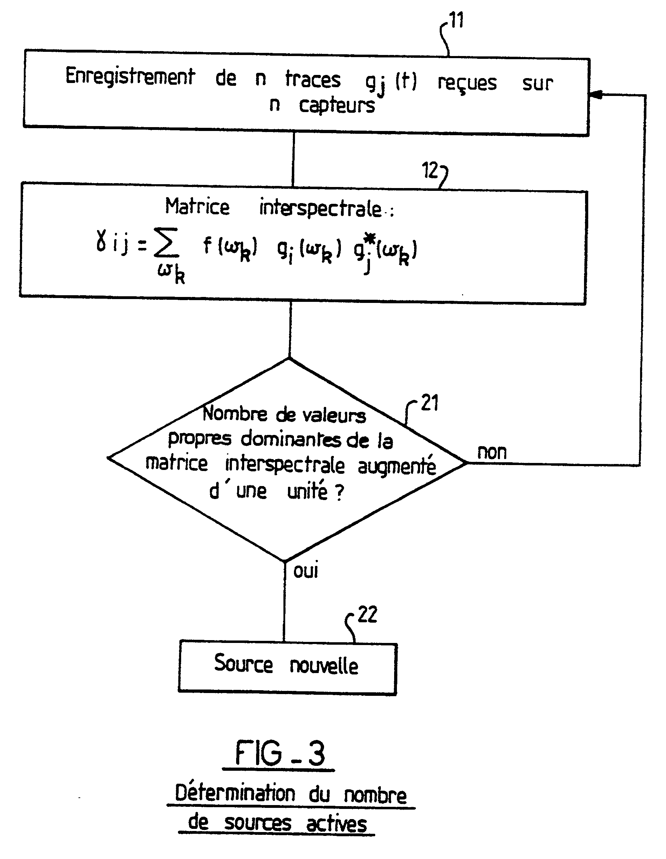

## DETECTION DE L'APPARITION D'UNE SOURCE NOUVELLE (Figure 3).

Le procédé conforme à l'invention utilise n capteurs sensibles au champ électromagnétique et permettant d'enregistrer n traces temporelles pendant un temps d'observation T (étape 11).

On désigne ces traces par $g_j(t)$ avec $j : 1, 2,...n$, et par $g_j(\omega)$ les transformées de Fourier de ces traces.

En divisant le domaine fréquentiel en p intervalles centrés chacun sur une fréquence $\omega_c$, les n traces enregistrées permettent d'estimer p matrices interspectrales $\gamma$ (étape 12), telles que :

$$(1) \qquad \gamma_{ij} = \sum_{\omega_k} f(\omega_k) \cdot g_i(\omega_k) \cdot g_j^*(\omega_k)$$

avec

| i | $= 1$ à n, |
| j | $= 1$ à n, |
| k | $= 1$ à m, où |

m représente le nombre de fréquences dans chaque intervalle p considéré,

$g^*$ représentant selon la notation classique le conjugué complexe de g, et

$f(\omega_k)$ représentant un filtre.

Chaque matrice interspectrale $\gamma$ a pour dimension $n \times n$.

Soit $\gamma'$ la plus grande matrice carrée contenue dans $\gamma$ et n' incluant aucun élément diagonal de $\gamma$.

Le nombre de sources actives, à la fréquence $\omega_c$, est donné par le nombre de valeurs propres dominantes de $\gamma'$.

Si n, dimension de la matrice interspectrale $\gamma$, est pair, $\gamma'$ est de dimension $n/2 \times n/2$. $\gamma'$ possède alors au plus $(n/2 - 1)$ valeurs propres dominantes.

Si on veut déterminer s sources, il faut donc que :

$$(2) \qquad n/2 - 1 \geq s, \text{ soit}$$

3

(3)     $n \geqq 2s + 2$

Par contre, si n, dimension de la matrice interspectrale $\gamma$ est impair, $\gamma'$ est de dimension $\frac{n-1}{2} \times \frac{n-1}{2}$. $\gamma'$ possède alors au plus $\frac{n-1}{2} - 1$ valeurs propres dominantes.

Si on veut déterminer s sources il faut que :

$$\frac{n-1}{2} - 1 \geqq s \quad (4)$$

soit $n \geqq 2s + 3$.   (5)

Les relations ci-dessus, qui peuvent évidemment se résumer dans la condition (3), donnent donc le nombre n de capteurs qui doivent être utilisés selon le nombre de sources que l'on veut identifier.

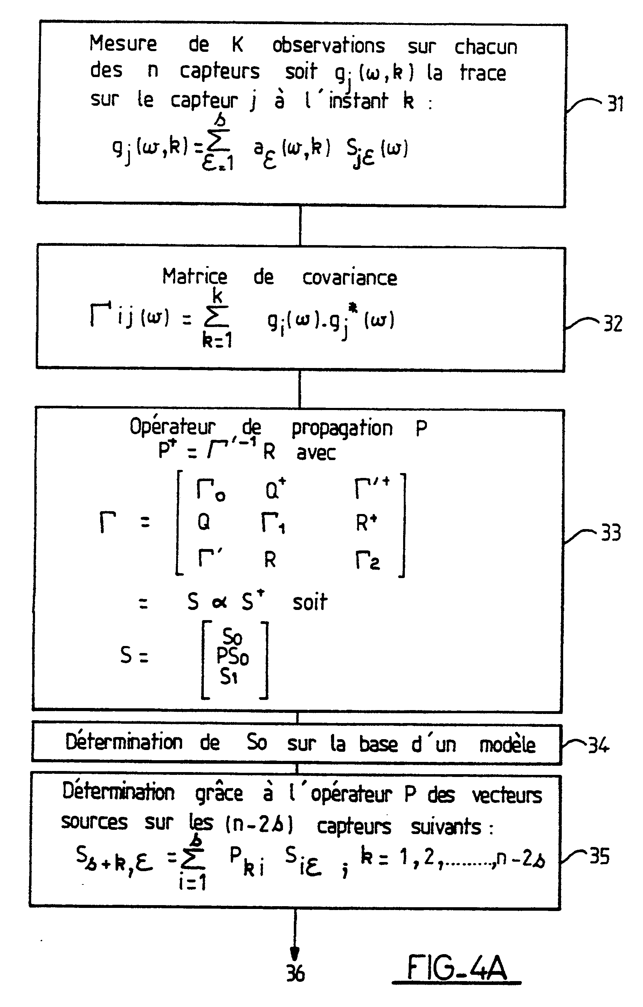

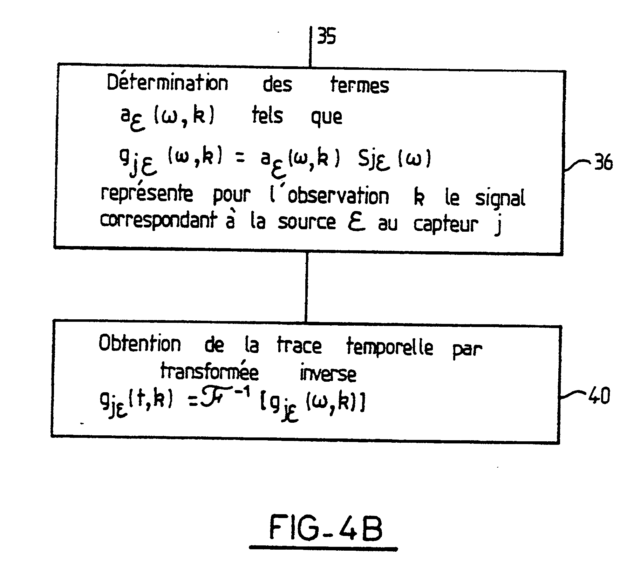

Comme indiqué précédemment, l'analyse du nombre de valeurs propres dominantes de $\gamma'$ permet de déterminer le nombre de sources actives. Lorsque l'analyse du nombre de valeurs propres dominantes de $\gamma'$ (étape 21) met en évidence l'apparition d'une source nouvelle (étape 22) le traitement est poursuivi par la seconde phase de séparation des sources, illustrée schématiquement sur la figure 4.

## SEPARATION DES SOURCES

Au cours de cette phase, on considère K observations $g_j$ successives caractérisées chacune par un temps d'observation T (étape 31). Le nombre K d'observations est supérieur au nombre s de sources. On appellera k le rang d'une telle observation.

Soit $g_j(\omega, k)$ la transformée de Fourier à la pulsation $\omega$ de la trace enregistrée au capteur j pendant l'observation de rang k.

On constitue (étape 32) la matrice de covariance définie par :

$$\Gamma_{ij}(\omega) = \sum_{k=1}^{K} g_i(\omega) \cdot g_j^{*}(\omega) \quad (6)$$

avec $i = 1$ à n, et $j = 1$ à n

Cette matrice peut s'écrire sous la forme $\Gamma_{ij}(\omega) = S \alpha S^{+}$ où   (7)
S est une matrice de dimension $n \times s$
$\alpha$ est une matrice de dimension $s \times s$, et
$S^{+}$ représente la transposée Hermitienne de la matrice S.

En effet, la trace $g_j(\omega, k)$ enregistrée sur le capteur j à l'observation k s'écrit à la pulsation $\omega$ :

$$g_j(\omega, k) = \sum_{\varepsilon=1}^{s} a_\varepsilon(\omega, k) S_{j\varepsilon}(\omega) \quad (8) \quad \text{où}$$

$a_\varepsilon$ représente l'amplitude complexe de la source $\varepsilon$ et
$S_{jk}$ représente la composante du vecteur source de la source $\varepsilon$ sur le capteur j, c'est-à-dire la fonction de transfert pour la source $\varepsilon$ entre le capteur j et le capteur 1. soit

$$\Gamma_{ij}(\omega) = \sum_{k=1}^{K} \sum_{\varepsilon=1}^{s} \sum_{\beta=1}^{s} S_{i\varepsilon}(\omega) a_\varepsilon(\omega, k) a_\beta^{*}(\omega, k) S_{j\beta}^{*}(\omega) \quad (9)$$

La matrice $\alpha$ est définie par

$$\alpha_{\varepsilon\beta}(\omega) = \sum_{k=1}^{K} a_\varepsilon(\omega, k) a_\beta^{*}(\omega, k) \quad (10)$$

tandis que la matrice S est la matrice des sources $S_{i\varepsilon}(\omega)$ avec i variant de 1 à n et $\varepsilon$ variant de 1 à s.

4

Déterminer le signal correspondant à la source ε au capteur j revient donc à déterminer $a_\varepsilon(\omega, k)$ et $S_{j\varepsilon}(\omega)$.

Pour cela l'invention propose de calculer (étape 33) un opérateur de propagation P qui, connaissant les composantes de s sources sur s capteurs, permet de déterminer automatiquement les composantes des sources sur d'autres capteurs.

La matrice source S de dimension n × s peut s'écrire :

$$S = \begin{bmatrix} So \\ PSo \\ S_1 \end{bmatrix} \quad (11)$$

où So et $S_1$ sont des matrices régulières de dimension s × s et P qui représente la matrice de propagation est de dimension (n − 2s) × s.

Parallèlement la matrice de covariance peut s'écrire :

$$\Gamma = \begin{bmatrix} \Gamma o & Q^+ & \Gamma'^+ \\ Q & \Gamma_1 & R^+ \\ \Gamma' & R & \Gamma_2 \end{bmatrix} \quad (12)$$

où $\Gamma_o$, $\Gamma_2$ et $\Gamma'$ sont de dimension s × s
$Q^+$ et R sont de dimension s × (n − 2s) et
$\Gamma_1$ est de dimension (n − 2s) × (n − 2s).
On peut écrire :

(13)  $\Gamma' = S_1 \alpha\, S_o^+$ et

(14)  $R = S_1 \alpha\, S_o P^+$ soit

(15)  $P^+ = \Gamma'^{-1} R.$

L'opérateur de propagation P de dimension (n − 2s) × s peut donc être calculé à partir de la matrice Γ sans qu'aucun terme de la diagonale de Γ n'intervienne.

La matrice de base $S_o$ peut être déterminée soit sur la base des traces enregistrées sur s capteurs, en rapprochant le signal reçu d'un modèle donné (étape 34), soit par la résolution du problème inverse défini par la relation ci-dessous :

$$(16) \quad S_{s+k,j} = \sum_{\varepsilon=1}^{s} P_{k,\varepsilon}\, S_{\varepsilon j} \quad \text{avec } k = 1,2\ldots(n - 2s).$$

Pour chaque observation on calcule (étape 36) des termes $a_\varepsilon(\omega, k)$ tels que, pour l'observation k, le signal correspondant à la source ε au capteur j soit donné par :

(17)  $g_{j\varepsilon}(\omega, k) = a_\varepsilon(\omega, k) S_{j\varepsilon}(\omega).$

De là, on obtient (étape 40) la trace temporelle correspondant à l'effet de la source ε par transformée inverse de Fourier :

$$(18) \quad g_{j\varepsilon}(t,l) = \mathcal{F}^{-1}(g_{j\varepsilon}(\omega,k)).$$

La connaissance précise de la trace temporelle de chaque source permet entre autre d'isoler une source nouvelle pour analyser par exemple si celle-ci constitue ou non un signe précurseur de séisme (en comparant le signal utile mesuré et séparé à des modèles connus de signaux précurseurs de séismes, par exemple les modèles révélés par les physiciens grecs P. VAROTSOS, K. ALEXOPOULOS et K. NOMIKOS tels qu'évoqués dans les documents suivants : "La Recherche" n. 178 juin 1986 page 836 et Elsevier Sciences Publishers B.V. 1984 "Physical properties of the electromagnetism of the earth preceding Earthquakes", P. VAROTSOS et K. ALEXOPOULOS).

Cependant, comme indiqué précédemment, l'invention n'est pas limitée à la prédiction de séismes. Elle trouve également application dans l'étude de la structure et de la composition du sous-sol. Pour cette étude, la phase de séparation des sources est opérée automatiquement, après avoir déterminé le nombre de sources actives, sans attendre l'apparition d'une source nouvelle.

## Revendications

1. Système d'acquisition et de séparation des effets de sources simultanées de champ électromagnétique comprenant un réseau de n capteurs (1a... 1e) liés à des moyens d'enregistrement (2), caractérisé par le fait qu'il comprend des moyens de traitement (3) aptes à déterminer le nombre de sources actives par détermination du nombre de valeurs propres dominantes de matrices interspectrales :

$$(1) \qquad \Upsilon_{ij} = \sum_{\omega_k} f(\omega_k) \cdot g_i(\omega_k) \cdot g_j^* \cdot (\omega_k)$$

$f(\omega\,k)$ représente un filtre

$g(\omega\,k)$ représente les transformées de FOURIER des traces enregistrées

$g^*(\omega\,k)$ représente le conjugué complexe de $g(\omega\,k)$,

$i = 1$ à $n$

$j = 1$ à $n$

$k = 1$ à $m$, et

m représente le nombre de fréquences dans chaque intervalle de fréquence considéré, et

— que le nombre minimal n de capteurs par réseau est égal à $2s + 2$, s étant le nombre de sources simultanées à analyser.

2. Système selon la revendication 1, caractérisé par le fait que les moins d'enregistrement (2) mémorisent les n traces issues des capteurs, de façon synchrone.

3. Procédé d'acquisition et de séparation des effets de sources simultanées de champ électromagnétique, caractérisé par le fait qu'il comprend les étapes consistant à

— enregistrer n traces gj (6) issues d'un réseau de n capteurs, dans lequel n est supérieur ou égal à $2s + 2$, s étant le nombre de sources simultanées à étudier, et

— déterminer le nombre de sources actives en déterminant le nombre de valeurs propres dominantes de matrices interspectrales :

$$(1) \qquad \Upsilon_{ij} = \sum_{\omega_k} f(\omega_k) \cdot g_i(\omega_k) \cdot g_j^* \cdot (\omega_k)$$

$f(\omega\,k)$ représente un filtre,

$g(\omega\,k)$ représente les transformées de FOURIER des traces enregistrées,

$g^*(\omega\,k)$ représente le conjugué complexe de $g(\omega\,k)$

$i = 1$ à $n$

$j = 1$ à $n$

$k = 1$ à $m$ et

m représente le nombre de fréquences dans chaque intervalle considéré.

4. Procédé de séparation des effets de sources simultanées de champ électromagnétique selon la revendication 3, caractérisé par le fait qu'après l'étape de détermination du nombre de sources actives, il comprend l'étape consistant à reconstituer l'effet de chaque source.

5. Procédé selon l'une des revendications 3 et 4, caractérisé par le fait que l'apparition d'une source nouvelle est détectée par l'apparition d'une valeur propre dominante nouvelle.

6. Procédé selon l'une des revendications 3 à 5, caractérisé par le fait que la reconstitution de l'effet de chaque source, comprend les étapes consistant à :

— accumuler K observations,

— déterminer les vecteurs-sources de s sources actives, sur s capteurs, et

— déterminer les vecteurs-sources des autres capteurs à l'aide d'un opérateur de propagation.

7. Procédé selon l'une des revendications 3 à 6, caractérisé par le fait qu'il est appliqué à la prédiction de séismes.


**Patentansprüche**

1. System zur Gewinnung und Trennung von Effekten gleichzeitig auftretender Quellen eines elektromagnetischen Feldes mit einem Netz aus n mit einer Speichereinrichtung (2) verbundenen Meßwertgebern (1a... 1e), **gekennzeichnet** durch eine Verarbeitungsvorrichtung (3), die die Anzahl der aktiven Quellen bestimmen kann, und zwar durch Bestimmen der Anzahl der dominanten Eigenwerte der intersprektalen Matrizen :

$$\gamma_{ij} = \sum_{\omega_k} f(\omega_k) \cdot g_i(\omega_k) \cdot g_j^* \cdot (\omega_k) \qquad (1)$$

wobei

$f(\omega k)$ einen Filter,

$g(\omega k)$ die Fourier-Transformierten der aufgezeichneten Spuren

$g^*(\omega k)$ die Konjugiertkomplexe von $g(\omega k)$ darstellt,

$i = 1$ bis n,

$j = 1$ bis n,

$k = 1$ bis m und

m die Anzahl der Frequenzen in jedem berücksichtigten Frequenzintervall ist und

dadurch, daß die kleinste Anzahl n der Meßwertgeber des Netzes gleich 2s + 2 ist, wobei s die Anzahl der gleichzeitig zu analysierenden Quellen ist.

2. System nach Anspruch 1, dadurch **gekennzeichnet**, daß die Speichereinrichtung (2) n von den Meßwertgebern ausgegebene Spuren synchron speichert.

3. Verfahren zur Gewinnung und Trennung von Effekten gleichzeitig auftretender Quellen eines elektromagnetischen Feldes, **gekennzeichnet** durch die Verfahrensschritte : Aufzeichnen von n von einem Feld aus n Meßwertgebern ausgegebenen Spuren gj (6), wobei n größer oder gleich 2s + 2 und s die Anzahl der gleichzeitig zu untersuchenden Quellen ist, und Bestimmen der Anzahl der aktiven Quellen durch Bestimmen der Anzahl der dominanten Eigenwerte der interspektralen Matrizen :

$$\gamma_{ij} = \sum_{\omega_k} f(\omega_k) \cdot g_i(\omega_k) \cdot g_j^* \cdot (\omega_k) \qquad (1)$$

wobei

$f(\omega k)$ einen Filter,

$g(\omega k)$ die Fourier-Transformierten der aufgezeichneten Spuren,

$g^*(\omega k)$ die Konjugiertkomplexe von $g(\omega k)$ darstellt,

$i = 1$ bis n,

$j = 1$ bis n,

$k = 1$ bis m und

m die Anzahl der Frequenzen in jedem berücksichtigten Intervall ist.

4. Verfahren zum Trennen von Effekten gleichzeitig auftretender Quellen eines elektromagnetiachen Feldes nach Anspruch 3, **gekennzeichnet** durch den Verfahrensschritt, die Wirkung jeder Quelle wiederherzustellen, nachdem die Anzahl der aktiven Quellen bestimmt worden ist.

5. Verfahren nach Anpsruch 3 oder 4, dadurch **gekennzeichnet**, daß das Auftreten einer neuen Quelle durch Auftreten eines neuen dominanten Eigenwertes erkannt wird.

6. Verfahren nach einem der Ansprüche 3 bis 5, dadurch **gekennzeichnet**, daß das Wiederherstellen der Wirkung jeder Quelle folgende Verfahrensschritte aufweist : Speichern von K Beobachtungen, Bestimmen der Quellenvektoren von s aktiven Quellen, bei s Meßwertgebern, und

Bestimmen der Quellenvektoren der anderen Meßwertgeber mithilfe eines Übertragungsoperators.

7. Verfahren nach einem der Ansprüche 3 bis 6, dadurch **gekennzeichnet**, daß es bei der Vorhersage von Erdbeben angewendet wird.

## Claims

1. A system for acquisition and separation of the effects of simultaneous sources of electromagnetic field comprising an array of n pick-ups (1a...1e), connected to registration means (2), characterized by the fact that:
— it comprises processing means (3) adapted to determine the number of active sources by determining the number of proper dominant values of interspectral matrices :

$$(1) \quad Y_{ij} = \sum_{\omega_k} f(\omega_k) \cdot g_i(\omega_k) \cdot g_j^*(\omega_k)$$

$f(\omega_k)$ represents the filter,
$g(\omega_k)$ represents the Fourier transforms of the registered traces,
$g^*(\omega_k)$ represents the complex conjuguate of $g(\omega_k)$,
$i = 1$ to n,
$j = 1$ to n,
$k = 1$ to m, and
m represents the number of frequences in each interval considered of frequences, and
— that the minimum number n of pick-ups per array is equal to $2s + 2$, s being the number of simultaneous sources to be analysed.

2. A system according to claim 1, characterized by the fact that the registration means (2) memorise n traces coming from the pick-ups in a synchronous manner.

3. A method for acquisition and separation of the effects of simultaneous sources of electromagnetic field, characterized by the fact that it comprises the phases consisting of :
— registering n traces $g_j(t)$, coming from an array of n pick-ups in which n is greater than or equal to $2s +$ 2, s being the number of simultaneous sources to be studied, and
— determining the number of active sources by determining the number of proper dominant values of interspectral matrices :

$$(1) \quad Y_{ij} = \sum_{\omega_k} f(\omega_k) \cdot g_i(\omega_k) \cdot g_j^* \cdot (\omega_k)$$

$f(\omega_k)$ represents a filter,
$g(\omega_k)$ represents the Fourier transforms of the registered traces,
$g^*(\omega_k)$ represents the complex conjuguate of $g(\omega_k)$,

$i = 1$ to n,
$j = 1$ to n,
$k = 1$ to n, and
m represents the number of frequences in each interval considered.

4. Method of separation of the effects of simultaneous sources of electromagnetic field according to claim 3, characterized by the fact that after the phase of determining the number of active sources, it comprises the phase of reconstituting the effect of each source.

5. A method according to one of claims 3 and 4, characterized by the fact that the appearance of a new source is detected by appearance of a new proper dominant value.

6. A method according to any one of claims 3 to 5, characterized by the fact that the reconstitution of the effect of each source, comprises the stages consisting of :

accumulating K observations,

determining the source vectors for s sources on s pick-ups, and

determining the source vectors for other pick-ups by the aid of a propogation operator.

7. A method according to any one of claims 3 to 6, characterized by the fact that it is applied to the prediction of earthquakes.

1a

Capteur

1b

Capteur

1c

Capteur

1d

Capteur

1e

Capteur

2 — Enregistrement synchrone

3 — Traitement et visualisation

FIG _1

Recherche du nombre de sources électromagnétiques sur la base des traces enregistrées sur n capteurs — 10

Source nouvelle ? — 20

non

oui

Séparation des sources — 30

Reconstitution de la réponse de la source nouvelle — 40

## FIG-2

Enregistrement de n traces $g_j(t)$ reçues sur n capteurs ⌐11

Matrice interspectrale : ⌐12

$$\gamma_{ij} = \sum_{\omega_k} f(\omega_k) \ g_i(\omega_k) \ g_j^*(\omega_k)$$

Nombre de valeurs propres dominantes de la matrice interspectrale augmenté d'une unité ? ⌐21

non

oui

Source nouvelle ⌐22

## FIG _ 3

### Détermination du nombre de sources actives

Mesure de K observations sur chacun des n capteurs soit $g_j(\omega,k)$ la trace sur le capteur $j$ à l'instant $k$ :

$$g_j(\omega,k) = \sum_{\varepsilon=1}^{b} a_\varepsilon(\omega,k)\ S_{j\varepsilon}(\omega)$$

31

Matrice de covariance

$$\Gamma_{ij}(\omega) = \sum_{k=1}^{k} g_i(\omega).g_j^*(\omega)$$

32

Opérateur de propagation P
$$P^+ = \Gamma'^{-1} R \quad \text{avec}$$

$$\Gamma = \begin{bmatrix} \Gamma_0 & Q^+ & \Gamma'^+ \\ Q & \Gamma_1 & R^+ \\ \Gamma' & R & \Gamma_2 \end{bmatrix}$$

$$= S \propto S^+ \quad \text{soit}$$

$$S = \begin{bmatrix} S_0 \\ PS_0 \\ S_1 \end{bmatrix}$$

33

Détermination de $S_0$ sur la base d'un modèle

34

Détermination grâce à l'opérateur P des vecteurs sources sur les $(n-2b)$ capteurs suivants :

$$S_{b+k,\varepsilon} = \sum_{i=1}^{b} P_{ki}\ S_{i\varepsilon}\ ; \quad k = 1,2,\ldots,n-2b$$

35

36

## FIG_4A

35

| |
|---|
| Détermination des termes<br><br>$a_{\mathcal{E}}(\omega, k)$ tels que<br><br>$g_{j\mathcal{E}}(\omega, k) = a_{\mathcal{E}}(\omega, k) \, S_{j\mathcal{E}}(\omega)$<br><br>représente pour l'observation $k$ le signal<br>correspondant à la source $\mathcal{E}$ au capteur $j$ |

~36

| |
|---|
| Obtention de la trace temporelle par<br>transformée inverse<br>$g_{j\mathcal{E}}(t, k) = \mathcal{F}^{-1}[g_{j\mathcal{E}}(\omega, k)]$ |

~40

## FIG_4B